# EUROPEAN PATENT SPECIFICATION

(11) **EP 3 345 755 B1**
(45) Date of publication and mention of the grant of the patent: **19.05.2021**
(21) Application number: 18150521.5
(22) Date of filing: 07.01.2018
(51) Int. Cl.: B32B 5/02, B32B 7/06, B32B 7/12, B32B 15/08, B32B 15/14, B32B 15/20, B32B 27/12, B32B 27/32, B32B 27/34, B32B 27/36, B32B 3/26, E04B 1/62, E04D 12/00

(54) **HEAT REFLECTING VAPOUR CONTROL LAMINATE WITH VARIABLE WATER VAPOUR DIFFUSION**
WÄRMEREFLEKTIERENDES DAMPFBREMSENDES LAMINAT MIT VARIABLER WASSERDAMPFDIFFUSION
STRATIFIÉ DE COMMANDE DE VAPEUR RÉFLÉCHISSANT LA CHALEUR À DIFFUSION DE VAPEUR D'EAU VARIABLE

(30) Priority: 10.01.2017 GR 20170100005
(43) Date of publication of application: 11.07.2018
(73) Proprietor: Thrace Nonwovens & Geosynthetics S.A., 67100 Magiko Xanthis (GR)
(72) Inventor: KARAGEORGIOU, Christos, 67100 Xanthi (GR); KLAUSEN, Thomas, 31224 Peine (DE); PEIFER, Martin, D-66851 Queidersbach (DE); GEORGIADIS, George, 67100 Xanthi (GR)
(74) Representative: Samuelides, Emmanuel

(56) References cited:
- EP-A2- 1 400 348
- DE-U1-202004 007 543
- FR-A1- 2 884 843
- US-A1- 2004 062 919
- US-A1- 2010 209 663
- US-A1- 2011 033 658

## Description

The invention relates to vapour control laminates or VCLs (abbrev.) with variable water vapour diffusion.

Such laminates are known in the building construction, see for example DE 19514420 C1 (Fraunhofer Institut), DE 10111319 A1 (Oekologische Bausysteme B. I. Moll Gmbh & K.G.), DE 102014008530 A1 (Ewald Dörken GmbH) and have a variable diffusion resistance of vapour from warm areas to cold areas. It is noted that the diffusion resistance or resistivity of vapour may be expressed in terms of the equivalent air layer thickness S_{d} in length units. Thus, in the winter period, when the humidity of the ambient air is low, the VCL membrane has a high diffusion resistivity and consequently hampers the penetration of water vapour, which rises from the rooms below, to the roof and through the thermal insulation towards the ambient air. Contrary to winter weather conditions, in the summer period, the ambient air has a high humidity, which is accumulated on the top of the roof construction. Subsequently, the humidity that is vaporized, due to the solar radiation and the relative high temperatures, tends to flow towards the cooler lower closed space below the roof. However, when ambient air has high humidity, the diffusion resistivity Sd of the VCL underlay is decreased and the VCL allows the vapour to penetrate it from the top of the roof towards the inner space of the building. Thus, the accumulation of humidity on the top of the roof and in the thermal insulation is avoided and the roof dries relative faster. Insulating laminate means may be qualified as insulating means with variable vapour permeability according to EN 12572:2015-01.

There are known VCLs, which are water-tight and have variable vapour permeability. Such VCLs include a water-permeable and vapour-permeable carrier layer and a sealing layer with variable vapour permeability. The material of the carrier layer, which may be a spunbond made of PP (polypropylene), PE (polyethylene), PET (polyethylene terephthalate), PET/PP or PET/PE. The carrier layer provides strength of the laminate and the weight of the spunbond is usually between 20 grams/m² to 200 grams/m2. The sealing layer, which is flexible, may be a PA (polyamide), preferably PA6, film and it is applied on the carrier layer. The sealing layer functions as a vapour control layer, i.e. it is a barrier in winter to provide an obstacle to the vapour and permeable in summer to facilitate the vapour flow better through the film.

The VCLs protect both the structure of the roof and the thermal insulation that is usually found above the VCL underlay, i.e. the thermal insulation faces outdoors and the VCL indoors. Regarding the thermal insulation, its effectiveness is related to its thickness. However, as the thickness of the thermal insulation is increased, it requires more space for installation and becomes more sensitive to damage due to humidity and other causes.

Document DE 19514420 discloses a water vapour exchange system including a vapour retarder selected from (a) a film comprising polyamide selected from the following: polyamide 6, polyamide 4, polyamide 3 with a thickness of 20µm to 100µm and (b) a polymer coating (selected polyvinyl alcohol, dispersed synthetic resin, methyl cellulose, linseed oil alkyd resin, bone glue, protein derivatives) applied to a carrier material. The film or the coating of the disclosed system has a water vapour diffusion resistance that varies with the relative humidity of the atmosphere surrounding the vapour retarder, which relative humidity, when is in the region of 30% to 50% the water vapour diffusion resistance is 2 meters to 5 meters diffusion-equivalent air layer thickness, and when it is in the region of 60% to 80%, the water vapour diffusion is less than 1 meter diffusion-equivalent air-layer thickness.

Document WO 2015/120973 discloses a moisture-variable protective layer to be used for protecting a heat insulating layer in insulated building structures with a water-vapour-diffusion-dependent air layer thickness S_{d} that is dependent on the ambient humidity. The layer comprises a material that has a water-vapour-diffusion-equivalent air layer thickness S_{d} of greater than 10 m, when there is a relative humidity of the atmosphere surrounding the protective layer in the range from 0% to 25%, and a water-vapour-diffusion-equivalent air layer thickness Sd of less than 0.4 m, when there is a relative humidity of the atmosphere surrounding the protective layer in the range from 90% to 100%. Examples of material and thicknesses are given on page 9, lines 22 to 32 of WO 2015/120973**.**

US 2011/0033658 presents a radiation reflecting breather membrane that can be used on the outside of pitch roof and wall constructions. The membrane consists of two composed layer packages, an outer layer package and an inner layer package. The outer layer package comprises a perforated carrier polyethylene (PE) and a reflecting layer. The reflecting player comprises an aluminum layer deposited on a carrier polymer layer or a metal film.

DE 202004007543 presents a vapor diffusion-open and waterproof sealing sheet for the wall or roofs of buildings. The sheet comprises three layers. i.e. an inner layer of a PE or PP spunbond, an outer reflecting coating and a middle layer that is disposed between the inner layer and the outer layer middle layer, which is a hydrophobic treated spunbond. The reflective coating may be metallized and is produced by vapor deposition with aluminum. Alternatively, the outside surface of the outer reflective coating can be printed with a silver-colored printing or it includes heat-reflecting pigments.

US 2010/0209663 presents an under-roof screen that comprises a synthetic thermal insulation layer and two outer layers on both sides of the insulation layer. The outer layers are produced from a perforated material forming a thermal reflection barrier.

EP 1400348 presents a laminated breathable fabric, which includes one spunbond filamentous polymer fabric layer and a reflective film. In one example the reflective film comprises a three layer structure, i.e. a first polyolefin polymer layer of polypropylene or a copolymer of polyethylene and polypropylene, a second layer of metal, such as aluminum deposited upon the first layer by vacuum vapour or plasma deposition and a third layer comprising a polymer of polypropylene or a copolymer of polyethylene and polypropylene. The three layer reflective film is formed and microperforated prior to lamination to the at least one spunbond filamentous polymer fabric layer. The emissivity of the microperforated reflective film was measured according to ASTM C 1371-98, giving a value of typically 0.23 to 0.28, and in one case 0.14.

FR 2884843 presents a breathable vapour control membranes from polyamide with a layer that is metallized with silver or silver and gold for thermal insulation. The metallized layers document have pores between 50 and 200 nanometers. Tested specimens of the vapour control membranes of FR 2884843 achieve an emissivity of 5.5%.

An object of the invention is to provide an efficient and effective insulation of a building construction. A further object of the invention is to decrease the energy consumption for the heating and/or cooling of the building construction. A further object of the invention is a method to insulate the roof of buildings. A further object of the invention is a method of production of an an efficient and effective insulation underlay for a building construction.

The invention is defined in the independent claims. Dependent claims define additional features which offer further advantages to the invention.

A heat reflecting vapour control laminate (VCL) according to the invention comprises insulating laminate means that include a vapour-permeable carrier layer and a water-tight sealing layer with variable vapour permeability comprising PA6 or a PA6,6 polyamide. The sealing layer is attached on one side of the two sides of the carrier layer. The VCL further comprises a perforated aluminum foil, forming an aluminum layer, which adheres on the other side of the two sides of the carrier layer.

The method of production of a heat reflecting vapour control laminate includes: a) providing perforated means including an aluminum foil with a thickness in a range from 7 microns to 200 microns, b) providing insulating laminate means including a vapour-permeable spunbond carrier layer and a water-tight sealing layer with variable vapour permeability comprising polyamide and c) adhering the perforated means to the insulating laminate means without applying mechanical pressure using at least one of the following methods a) adhesives, b) hotmelt lamination, c) thermal adhesion.

With a heat reflecting vapour control laminate with variable vapour permeability according to the invention, thermal losses are considerably reduced. Further, an underlay according to the invention provides the required vapour permeability during the whole year and hampers the formation and accumulation of mold in the building construction.

Preferably, the perforated aluminum layer has a thickness in a range from 7 microns to 50 microns, and it is applied on the insulating laminate means with cold or hot chemical adhesives or hotmelt lamination. The aluminum layer can be attached directly or indirectly to the insulating laminate means. In the latter case the aluminum layer is applied on a layer made of PP, PET, PE. In addition, the aluminum layer can be lacquered. When the aluminum layer is attached indirectly to the insulating laminate means, i.e. the aluminum layer is applied on a polymer layer made of PP, PET, PE, both the aluminum layer and the polymer layer are perforated, and the insulating means are not. In any case, i.e. either direct or indirect attachment of the aluminum layer, the invention uses an aluminum film rather than metallizing or aluminizing a polymeric layer by any means, for example deposition by vapour.

In addition, the aluminum layer can be lacquered.

In all cases no mechanical pressure is applied, i.e. adhesion by calendering, so that the attachment will not affect negatively the properties of the final product.

Advantageously the emissivity of such a heat reflecting vapour control laminate is equal or less than 5%.

The insulating laminate means includes a vapour-permeable carrier layer and a sealing layer with variable vapour-permeability and preferably the perforated metal coating is applied on the carrier layer.

In one embodiment the perforations are almost circular with a diameter in the range of 10 microns to 1000 microns, and follow a pattern with a pitch within a range from 0.5 mm to 10 mm, preferably 2 mm to 3 mm, in the direction of production of the heat reflecting vapour control laminate. Additional perforation patterns such as rectangular or triangle or others can be used.

In use the heat reflecting vapour control laminate is usually placed below a thermal insulation towards the interior of the building. Preferably the insulating laminate means faces the thermal insulation and it is arranged between the thermal insulation and the perforated aluminum layer, which faces the interior of the building. A VCL according to the invention is particularly advantageous for sloping roofs. The aluminum layer is placed so that there is an air gap between the aluminum layer and the elements of the building. Preferably the air gap should be at least 1 cm.

Joining adjacent vapour control laminates may be done with standard procedures, such as double sided adhesive tape, butyl or any other suitable glue, adhesive applied via spray application, slot die, kiss roller application or other mechanical adhesions, such as nailing, stapling.

Preferred embodiments of the invention are described with reference to **Figures 1 to 4****:**
**Figure 1** shows an example of a heat reflecting VCL according to the invention,
**Figure 2** shows another example of a heat reflecting VCL according to the invention,
**Figure 3** shows an example of an arrangement of the perforations on the metal perforated layer, and
**Figure 4** shows an example of a heat reflecting VCL with four layers.

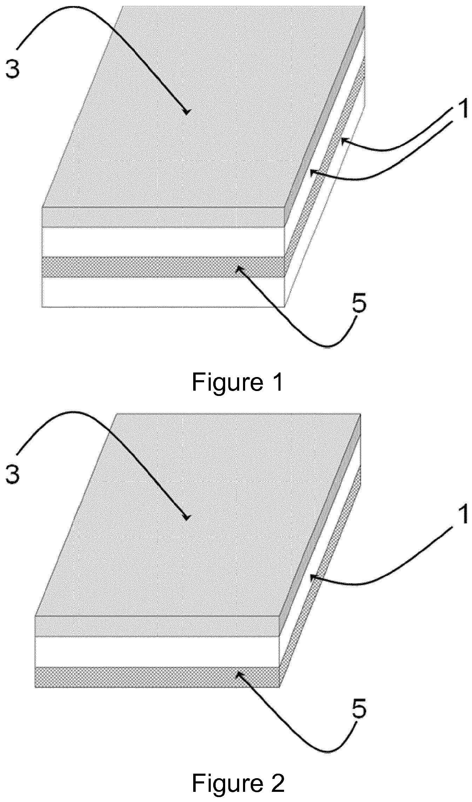

An embodiment of the invention is a heat reflecting vapour control laminate with variable water vapour diffusion that includes an insulating laminate means **1, 5** and a perforated aluminum foil **3.** The insulating laminate means has a carrier layer **1** and a PA6 polyamide film or a PA6,6 polyamide film **5** with variable vapour permeability. The optional embodiment of the invention that is schematically presented in **Figure 1****,** is a sandwich construction with the polyamide film **5** arranged between two carrier layers **1.** The perforated aluminum foil **3** is attached to the carrier layer **1** either directly or indirectly as described in the following paragraph. A heat reflecting VCL that has the perforated metal foil laminated to the carrier layer exhibits large differences of the diffusion resistivity between summer and winter conditions.

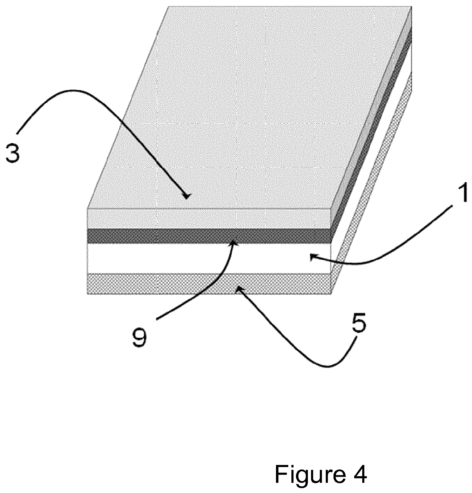

The aluminum layer can be made of pure aluminum and attached to the carrier layer or the aluminum layer **3** of the VC laminate may applied on a polymer layer **9** and attached to the carrier layer **1** indirectly via the polymer layer **9,** so that the polymer layer **9** adheres to the carrier layer **1** and it is arranged between the carrier layer **1** and the aluminum layer **3** as presented in **Figure 4****.** In this case the perforations penetrate both the polymer layer **9** and the aluminum layer **3,** but not the carrier layer **1.** Such a laminate, i.e. a laminate including an aluminum layer **3** and a polymer layer **9,** provides relatively higher strength that a single aluminum layer **3.** The attachment of the aluminum layer **3** or of the polymer layer **9** to the carrier layer **1** may be achieved via hotmelt lamination or using adhesives or thermal adhesion. Mechanical pressure for adhesion is neither recommended nor applied, because it does effect the properties of the final product.

In the embodiment of **Figure 2****,** the insulating laminate means includes a polyamide film **5** and a carrier layer **1** attached on one side of the polyamide film **5.** The other side of the polyamide film **5** is uncovered. In this embodiment the perforated aluminum foil **3** is laminated to the carrier layer **1.**

The attachment of the aluminum foil to the insulating laminate means provides a layer that reflects heat and simultaneously allows the transport of humidity through the vapour control laminate. As the perforated aluminum or any other perforated metal layer is attached to the insulating carrier means, there is no air gap between the two elements, i.e. the perforated metal layer and the insulating laminate means, to hamper the transport of humidity.

In winter, known vapour control laminates, i.e. laminated without the metal shielding, decrease the penetration of water vapour into the roof which rises from the rooms below. However, although the VCL reflects the critical amount of humidity, the thermal energy from the rooms below, will penetrate through the VCL membrane into the roof. When using the multi-layer vapour control layer according to the invention, due to the added aluminum foil, the thermal energy will be reflected to the rooms below and therefore the costs for heating the rooms will be decreased.

In summer the perforated metal foil increases the heat reflection, which is caused by solar radiation from outside the house, which enables a better climate in the living spaces of the house below the roof. Due to its micro-perforation the humidity released from the roof construction can penetrate through the membrane, so that the additional thermal barrier does not have a negative impact of the humidity transport through the laminate.

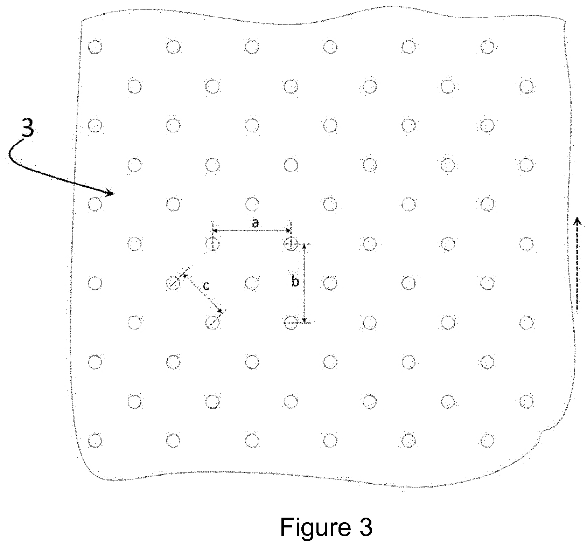

Optionally the perforations are holes with a diameter between 10 microns and 1000 microns. The arrangement of the perforations is shown in **Figure 3****.** In the embodiment that is presented in **Figure 3****,** the perforations are arranged in a diamond or rhomboid or Argyle pattern in the direction of production of the laminate. The direction of production is shown in **Figure 3** with the dotted arrow. The side of the rhomboid a =b is in a range of 0.5 mm to 10 mm, optionally 3 mm and the diagonals of the rhomboid may be equal or unequal. In one example, the distance of adjacent holes c is approximately 2 mm. In another example a and b are unequal and both a and b are in the range of 0.5 mm to 10 mm. Other forms and dimensions of perforations and other distances between perforations are also possible.

In general the carrier layer has a thickness of 100 microns to 1200 microns and its weight is in the range of 20 g/m² to 200 g/m². The active layer a thickness of 20 microns to 100 microns and its weight is in the range of 20 g/m² to 60 g/m².

The aluminum film has a thickness in the range of 7 microns (µm) to 200 microns, preferably less than 50 microns and its weight is in the range of 10 g/m² to 100 g/m², whereas in certain cases in may reach 135 g/m². In one example of the invention the aluminum film or foil has a thickness equal to approximately 9 µm and its weight is approximately 20 - 24 g/m². In case that the aluminum is attached to a polymer, the aluminum/polymer thickness will be approximately 60 µm and its weight is approximately 44 g/m².

The free face of the aluminum layer may be lacquered for corrosion protection and to avoid the oxidation of the aluminum, which causes the creation of brown spots by the building of rust on the aluminum surface.

Five uncoated specimens, i.e. VCL's comprising a PP spunbond carrier layer and a PA active film with no protective aluminum layer, and a corresponding number of specimens according to the invention, i.e. VCL's comprising a PP spunbond carrier layer and a PA active film adhered to a laminate of an aluminum foil and a PP layer, were tested. According to EN 15976, the emissivity of the uncoated specimens was approximately 80.9 % and the corresponding average emissivity of the specimens according to the invention was 2.2% with standard deviation of 0.2%. The water vapour diffusion equivalent air layer thickness, s_{d} in m, of both the coated and the uncoated specimens are shown in the Table that follows:

| | water vapour diffusion equivalent air layer thickness s_{d} in m | | | | | |
|---|---|---|---|---|---|---|
| r.h. | 0/50 % | | 50/93 % | | 85/95 % | |
| | A | B | A | B | A | B |
| spec. 1 | 5.46 | 5.59 | 0.72 | 0.86 | 0.38 | 0.31 |
| spec. 2 | 5.42 | 5.20 | 0.81 | 0.73 | 0.38 | 0.32 |
| spec. 3 | 5.35 | 5.50 | 0.77 | 0.88 | 0.41 | 0.31 |
| average | 5.41 | 5.43 | 0.77 | 0.82 | 0.39 | 0.31 |

The vapour diffusion equivalent air layer thickness was determined according to EN 12572:2015-01. Columns with the heading B include the values obtained with the uncoated specimens and the column noted with A the values obtained with the specimens according to the invention. The second line indicates the relative humidity in both sides of the specimen. Relative humidity 0% on one side and 50% on the other side or 50% on one side and 93% on the other side are according to EN 12572:2015-01 and simulate winter and summer conditions respectively.

It is anticipated that the combination of the perforated aluminum foil with the polyamide layer, which has high resistivity to vapour transmission during winter conditions result in a very favorable emissivity. A standalone perforated aluminum foil has such a favorable emissivity, seemingly because due to the perforations the material is too open and so that the heat just penetrate therethrough.

When placing the heat reflecting VCLs on a roof, a first heat reflecting VCL is placed on the roof with the aluminum side towards the inside of the house. Preferably, direct contact between the aluminum face of the VCL and the inside of the building should be avoided and it is further suggested to have an air gap of at least 1-2 cm between the VCL and the inside of the building. A second heat reflecting VCL with the same material composition like the first VCL may be adjusted adjacent to the first with its aluminum layer towards the insulating laminate means of the first VCL layer. The joining of the first and the second heat reflecting VCLs may be done with standard procedures, such as double sided adhesive tape, butyl glue, adhesive applied via spray application.

In use, usually the VCL is arranged below the thermal insulation, with the aluminum layer facing inwards towards the closed room.

## Claims

1. A heat reflecting vapour control laminate comprising insulating laminate means **(1, 5),** including a vapour-permeable carrier layer **(1)** and a water-tight sealing layer **(5)** with variable vapour permeability comprising PA6 or a PA6,6 polyamide, which sealing layer **(5)** is attached on one side of the two sides of the carrier layer **(1), characterized in that** it further comprises a perforated aluminum foil **(3)** with a thickness in a range from 7 microns to 200 microns, which adheres on the other side of the two sides of the carrier layer **(1).**

2. A heat reflecting vapour control laminate **according to claim 1,** whereby the perforated aluminum foil **(3)** is lacquered for corrosion protection.

3. A heat reflecting vapour control laminate **according to claims 1 or claim 2,** whereby the perforated aluminum foil **(3)** has almost rectangular or almost circular perforations with a diameter in the range of 10 microns to 1000 microns.

4. A heat reflecting vapour control laminate **according to any one of claims 1 to 3,** whereby the perforated aluminum foil **(3)** has perforations with a pitch in a range from 0.5 mm to 10 mm, preferably in a range from 2 mm to 3 mm, in the direction of production of the heat reflecting vapour control laminate.

5. A heat reflecting vapour control laminate **according to any one of claims 1 to 4,** whereby the perforated aluminum foil **(3)** has a thickness in a range from 7 microns to 50 microns.

6. A heat reflecting vapour control laminate **according to any one of claims 1 to 5,** whereby the aluminum foil is applied on a polymer layer **(9),** which polymer layer **(9)** is attached to the carrier layer **(1)** of the insulating means **(1, 5).**

7. A heat reflecting vapour control laminate **according to claim 6,** whereby the polymer layer **(9)** is disposed between the aluminum foil **(3)** and the insulating laminate means **(1, 5)** and the polymer layer **(9)** is attached to the insulating laminate means **(1, 5)** without applying mechanical pressure using at least one of the following methods a) adhesives, b) hotmelt lamination, c) thermal adhesion.

8. A heat reflecting vapour control laminate **according to claims 6 or claim 7,** whereby the perforated aluminum foil and polymer layer form a two layer structure that is attached during production to the carrier layer of the insulating means.

9. A heat reflecting vapour control laminate **according to any one of claims 6 to 8,** whereby the weight the perforated aluminum foil and polymer layer is in a range from 30 grams per square meter to 150 grams per square meter and/or the thickness of the aluminum foil is in a range from 7 microns to 50 microns.

10. A heat reflecting vapour control laminate **according to any one of claims 1 to 9,** whereby the emissivity of the heat reflecting vapour control laminate is equal or less than 5%.

11. Method to insulate a roof of a building using a heat reflecting vapour control laminate **according to any one of the preceding claim,** whereby the heat reflecting vapour control laminate is arranged so that the insulating laminate means faces the outside of the building and the perforated aluminum foil faces the inside of the building.

12. Method to insulate a roof of a building according to claim 11, whereby the heat reflecting vapour control laminate is placed below a thermal insulation and towards the interior of the building.

13. Method to insulate a roof of a building **according to claim 11 or claim 12,** whereby the heat reflecting vapour control laminate is placed so that there is an air gap of at least 1 cm below the aluminum face of the vapour control laminate.

14. Method of production of a heat reflecting vapour control laminate comprising the following steps: providing perforated means including an aluminum foil **(3),** which aluminiun foil **(3)** has a thickness in a range from 7 microns to 200 microns, providing insulating laminate means **(1, 5),** including a vapour-permeable carrier layer **(1)** and a water-tight sealing layer **(5)** with variable vapour permeability comprising PA6 or a PA6,6 polyamide, adhering the perforated means to the insulating laminate means **(1, 5)** without applying mechanical pressure using at least one of the following methods a) adhesives, b) hotmelt lamination, c) thermal adhesion.

15. Method of production of a heat reflecting vapour control laminate **according to claim 14,** whereby the perforated means consists of a polymer layer and an aluminum foil, and the attachment is effected between said polymer layer and the carrier layer.

## Patentansprüche

1. Wärmereflektierendes dampfsperrendes Laminat, das Isolierlaminatmittel **(1, 5)** umfasst, beinhaltend eine dampfdurchlässige Trägerschicht **(1)** und eine wasserfeste Dichtungsschicht **(5)** mit variabler Dampfdurchlässigkeit, umfassend PA6 oder PA6,6 Polyamid, welche Dichtungsschicht **(5)** an einer Seite der zwei Seiten der Trägerschicht **(1)** angebracht ist, **dadurch gekennzeichnet, dass** es weiter eine perforierte Aluminiumfolie **(3)** mit einer Dicke in einem Bereich von 7 Mikrometer bis 200 Mikrometer umfasst, die an der anderen Seite der zwei Seiten der Trägerschicht **(1)** anhaftet.

2. Wärmereflektierendes dampfsperrendes Laminat **nach Anspruch 1,** wobei die perforierte Aluminiumfolie **(3)** für Korrosionsschutz lackiert ist.

3. Wärmereflektierendes dampfsperrendes Laminat **nach Ansprüche 1 oder Anspruch 2,** wobei die perforierte Aluminiumfolie **(3)** annähernd rechteckige oder annähernd kreisförmige Perforationen mit einem Durchmesser in dem Bereich von 10 Mikrometer bis 1000 Mikrometer aufweist.

4. Wärmereflektierendes dampfsperrendes Laminat **nach einem der Ansprüche 1 bis 3,** wobei die perforierte Aluminiumfolie **(3)** Perforationen mit einer Teilung in einem Bereich von 0,5 mm bis 10 mm, vorzugsweise in einem Bereich von 2 mm bis 3 mm, in der Produktionsrichtung des wärmereflektierenden dampfsperrenden Laminats aufweist.

5. Wärmereflektierendes dampfsperrendes Laminat **nach einem der Ansprüche 1 bis 4,** wobei die perforierte Aluminiumfolie **(3)** eine Dicke in einem Bereich von 7 Mikrometer bis 50 Mikrometer aufweist.

6. Wärmereflektierendes dampfsperrendes Laminat **nach einem der Ansprüche 1 bis 5,** wobei die Aluminiumfolie auf eine Polymerschicht **(9)** aufgebracht wird, welche Polymerschicht **(9)** an der Trägerschicht **(1)** der Isoliermittel **(1, 5)** befestigt ist.

7. Wärmereflektierendes dampfsperrendes Laminat **nach Anspruch 6,** wobei die Polymerschicht **(9)** zwischen der Aluminiumfolie **(3)** und dem Isolierlaminatmittel **(1, 5)** angeordnet ist und die Polymerschicht **(9)** an den Isolierlaminatmitteln **(1, 5)** ohne Ausüben von mechanischem Druck unter Verwendung mindestens eines der folgenden Verfahren: a) Klebstoffe, b) Heißschmelzlaminierung, c) Wärmeadhäsion befestigt ist.

8. Wärmereflektierendes dampfsperrendes Laminat **nach Ansprüche 6 oder Anspruch 7,** wobei die perforierte Aluminiumfolie und Polymerschicht eine zweischichtige Struktur bilden, die während Produktion an der Trägerschicht des Isoliermittels befestigt wird.

9. Wärmereflektierendes dampfsperrendes Laminat **nach einem der Ansprüche 6 bis 8,** wobei das Gewicht der perforierten Aluminiumfolie und Polymerschicht in einem Bereich von 30 Gramm pro Quadratmeter bis 150 Gramm pro Quadratmeter liegt und/oder die Dicke der Aluminiumfolie in einem Bereich von 7 Mikrometer bis 50 Mikrometer liegt.

10. Wärmereflektierendes dampfsperrendes Laminat **nach einem der Ansprüche 1 bis 9,** wobei das Emissionsvermögen des wärmereflektierenden dampfsperrenden Laminats gleich oder kleiner 5% ist.

11. Verfahren zum Isolieren eines Dachs eines Gebäudes unter Verwendung eines wärmereflektierenden dampfsperrenden Laminats **nach einem des vorstehenden Anspruchs,** wobei das wärmereflektierende dampfsperrende Laminat so angeordnet ist, dass das Isolierlaminatmittel zur Außenseite des Gebäudes weist und die perforierte Aluminiumfolie zur Innenseite des Gebäudes weist.

12. Verfahren zum Isolieren eines Dachs eines Gebäudes **nach Anspruch 11,** wobei das wärmereflektierende dampfsperrende Laminat unter einer Wärmeisolierung und zu der Innenseite des Gebäudes platziert ist.

13. Verfahren zum Isolieren eines Dachs eines Gebäudes **nach Anspruch 11 oder Anspruch 12,** wobei das wärmereflektierende dampfsperrende Laminat so platziert ist, dass ein Luftspalt von mindestens 1 cm unter der Aluminiumfläche des dampfsperrenden Laminats ist.

14. Verfahren zum Herstellen eines wärmereflektierenden dampfsperrenden Laminats, umfassend die folgenden Schritte: Bereitstellen perforierter Mittel, enthaltend eine Aluminiumfolie **(3),** welche Aluminiumfolie **(3)** eine Dicke in einem Bereich von 7 Mikrometer bis 200 Mikrometer hat, Bereitstellen von Isolierlaminatmitteln **(1, 5),** beinhaltend eine dampfdurchlässige Trägerschicht **(1)** und eine wasserfeste Dichtungsschicht **(5)** mit variabler Dampfdurchlässigkeit, umfassend PA6 oder PA6,6 Polyamid, Anheften des perforierten Mittels an die Isolierlaminatmittel **(1, 5)** ohne Ausüben von mechanischem Druck unter Verwendung mindestens eines der folgenden Verfahren: a) Klebstoffe, b) Heißschmelzlaminierung, c) Wärmeadhäsion.

15. Verfahren zum Herstellen eines wärmereflektierenden dampfsperrenden Laminats **nach Anspruch 14,** wobei das perforierte Mittel aus einer Polymerschicht und einer Aluminiumfolie besteht und die Befestigung zwischen der Polymerschicht und der Trägerschicht ausgeführt wird.

## Revendications

1. Stratifié de commande de vapeur réfléchissant la chaleur comprenant des moyens de stratifié d'isolation **(1, 5),** incluant une couche porteuse perméable à la vapeur **(1)** et une couche de scellement étanche à l'eau **(5)** avec une perméabilité à la vapeur variable comprenant PA6 ou un polyamide de PA6,6, laquelle couche de scellement **(5)** est attachée sur un côté des deux côtés de la couche porteuse **(1), caractérisé en ce qu'**il comprend en outre une feuille d'aluminium perforée **(3)** avec une épaisseur dans une plage de 7 microns à 200 microns, qui se colle sur l'autre côté des deux côtés de la couche porteuse **(1).**

2. Stratifié de commande de vapeur réfléchissant la chaleur **selon la revendication 1,** selon lequel la feuille d'aluminium perforée **(3)** est laquée pour une protection anticorrosion.

3. Stratifié de commande de vapeur réfléchissant la chaleur **selon les revendications 1 ou la revendication 2,** selon lequel la feuille d'aluminium perforée **(3)** présente des perforations presque rectangulaires ou presque circulaires avec un diamètre dans la plage de 10 microns à 1000 microns.

4. Stratifié de commande de vapeur réfléchissant la chaleur **selon l'une quelconque des revendications 1** à **3,** selon lequel la feuille d'aluminium perforée **(3)** présente des perforations avec un pas dans une plage de 0,5 mm à 10 mm, de préférence dans une plage de 2 mm à 3 mm, dans la direction de production du stratifié de commande de vapeur réfléchissant la chaleur.

5. Stratifié de commande de vapeur réfléchissant la chaleur **selon l'une quelconque des revendications 1** à **4,** selon lequel la feuille d'aluminium perforée **(3)** présente une épaisseur dans une plage de 7 microns à 50 microns.

6. Stratifié de commande de vapeur réfléchissant la chaleur **selon l'une quelconque des revendications 1 à 5,** selon lequel la feuille d'aluminium est appliquée sur une couche de polymère (9), laquelle couche de polymère (9) est attachée à la couche porteuse **(1)** des moyens d'isolation **(1, 5).**

7. Stratifié de commande de vapeur réfléchissant la chaleur **selon la revendication 6,** selon lequel la couche de polymère **(9)** est disposée entre la feuille d'aluminium **(3)** et les moyens de stratifié d'isolation **(1, 5)** et la couche de polymère **(9)** est attachée aux moyens de stratifié d'isolation **(1, 5)** sans appliquer de pression mécanique en utilisant au moins un des procédés suivants a) des adhésifs, b) une stratification thermofusible, c) un collage thermique.

8. Stratifié de commande de vapeur réfléchissant la chaleur **selon les revendications 6 ou la revendication 7,** selon lequel la feuille d'aluminium perforée et la couche de polymère forment une structure à deux couches qui est attachée, durant la production, à la couche porteuse des moyens d'isolation.

9. Stratifié de commande de vapeur réfléchissant la chaleur **selon l'une quelconque des revendications 6 à 8,** selon lequel le poids de la feuille d'aluminium perforée et de la couche de polymère se trouve dans une plage de 30 grammes par mètre carré à 150 grammes par mètre carré et/ou l'épaisseur de la feuille d'aluminium se trouve dans une plage de 7 microns à 50 microns.

10. Stratifié de commande de vapeur réfléchissant la chaleur **selon l'une quelconque des revendications 1 à 9,** selon lequel l'émissivité du stratifié de commande de vapeur réfléchissant la chaleur est égale ou inférieure à 5 %.

11. Procédé d'isolation d'un toit d'un bâtiment en utilisant un stratifié de commande de vapeur réfléchissant la chaleur **selon l'une quelconque de la revendication précédente,** selon lequel le stratifié de commande de vapeur réfléchissant la chaleur est agencé de sorte que les moyens de stratifié d'isolation soient orientés vers l'extérieur du bâtiment et que la feuille d'aluminium perforée soit orientée vers l'intérieur du bâtiment.

12. Procédé d'isolation d'un toit d'un bâtiment **selon la revendication 11,** selon lequel le stratifié de commande de vapeur réfléchissant la chaleur est placé en dessous d'une isolation thermique et vers l'intérieur du bâtiment.

13. Procédé d'isolation d'un toit d'un bâtiment **selon la revendication 11 ou la revendication 12,** selon lequel le stratifié de commande de vapeur réfléchissant la chaleur est placé de sorte qu'il y ait un entrefer d'au moins 1 cm en dessous de la face d'aluminium du stratifié de commande de vapeur.

14. Procédé de production d'un stratifié de commande de vapeur réfléchissant la chaleur comprenant les étapes suivantes : fournir un moyen perforé incluant une feuille d'aluminium **(3),** laquelle feuille d'aluminium **(3)** présente une épaisseur dans une plage de 7 microns à 200 microns, fournir des moyens de stratifié d'isolation **(1, 5),** incluant une couche porteuse perméable à la vapeur **(1)** et une couche de scellement étanche à l'eau **(5)** avec une perméabilité à la vapeur variable comprenant PA6 ou un polyamide de PA6,6, coller le moyen perforé sur les moyens de stratifié d'isolation **(1, 5)** sans appliquer de pression mécanique en utilisant au moins un des procédés suivants a) des adhésifs, b) une stratification thermofusible, c) un collage thermique.

15. Procédé de production d'un stratifié de commande de vapeur réfléchissant la chaleur **selon la revendication 14,** selon lequel le moyen perforé consiste en une couche de polymère et une feuille d'aluminium, et l'attache est effectuée entre ladite couche de polymère et la couche porteuse.
